# EUROPÄISCHE PATENTSCHRIFT

(11) **EP 0 933 333 B1**
(45) Veröffentlichungstag und Bekanntmachung des Hinweises auf die Patenterteilung: **01.09.2004**
(21) Anmeldenummer: 99102047.0
(22) Anmeldetag: 02.02.1999
(51) Int. Cl.: C02F 1/70, A62D 3/00, B01J 33/00, B01J 38/70, B01J 38/60

(54) **Verwendung eines Trägerkatalysators**
Use of a supported catalyst
Utilisation d'un catalyseur à support

(30) Priorität: 02.02.1998 DE 19803635
(43) Veröffentlichungstag der Anmeldung: 04.08.1999
(73) Patentinhaber: I.M.E.S. Gesellschaft für Innovative Mess-, Erkundungs- und Sanierungstechnologien mbH, 88279 Amtzell (DE); STANFORD UNIVERSITY, Stanford, CA 94305-4055 (US)
(72) Erfinder: Schüth, Christoph, Dr, 72070 Tübingen (DE); Reinhard, Martin, Prof. Dr., Stanford 94305 (CA)

(56) Entgegenhaltungen:
- EP-A- 0 563 669
- EP-A- 0 658 359
- FR-A- 2 743 801
- US-A- 4 678 764
- US-A- 5 190 668
- US-A- 5 196 617
- US-A- 5 645 374
- PATENT ABSTRACTS OF JAPAN vol. 009, no. 247 (C-307), 3. Oktober 1985 & JP 60 102945 A (DAIDO TOKUSHUKO KK), 7. Juni 1985

## Beschreibung

Die Erfindung betrifft die Dehalogenierung von halogenierten Kohlenwasserstoffverbindungen in einer wäßrigen Phase unter Bedingungen, bei denen Wasser als fluide Phase vorliegt, insbesondere in einem Temperaturbereich von 0° C bis +70° C, und unter normalen Druckverhältnissen, d.h. bei Atmosphärendruck bis zu ca. 35 bar.

Halogenierte Kohlenwasserstoffverbinden, wie z.B. Trichlorethylen (TCE), Perchlorethylen (PCE), Vinylchlorid (VC), Chlorbenzole, polychlorierte Biphenyle (PBC), Pestizide, wie z.B. γ-Hexachlorocyclohexan (Lindan), und polyzyklische aromatische Kohlenwasserstoffe (PAK) machen einen großen Teil der in kontaminierten Böden und im Grundwasser anzutreffenden Schadstoffe aus. Durch eine Dehalogenierung und ggf. eine Hydrierung können diese Kohlenwasserstoffverbinden, die zumindest zum Teil hochgiftig und kanzerogen sind, in ungefährliche und/oder einfach abbaubare Substanzen umgewandelt werden. Die Dehalogenierung von halogenierten Kohlenwasserstoffverbindungen in einer wäßrigen Phase bei Umgebungstemperatur und unter normalen Druckverhältnissen ist daher für die Boden- und Grundwassersanierung von besonderer Bedeutung.

Aus dem Stand der Technik sind bereits verschiedene Katalysatoren bekannt, die eine Dehalogenierung von halogenierten Kohlenwasserstoffverbindungen unterstützen. So kommt es bspw. auch beim katalytischen Cracken von Kohlenwasserstoffverbindungen zu einer Dehalogenierung. Der Crackprozeß und also die damit in Verbindung stehenden Dehalogenierungsprozesse erfolgen in der Regel in der Dampfphase, bei relativ hohen Temperaturen und Drücken. Diese Methode der Dehalogenierung kommt also für die Durchführung von Boden- und Grundwassersanierungsmaßnahmen nicht in Frage.

Die US-Patente 5 177 268 und 5 196 617 beschäftigen sich beide mit der Hydrodehalogenierung von halogenierten organischen Verbindungen, insbesondere Benzolverbindungen, in einer wäßrigen Umgebung zum Zwecke der Boden- und Grundwassersanierung. In beiden Druckschriften wird dazu die Verwendung eines Katalysators vorgeschlagen, der im wesentlichen aus einem Kohleträger besteht, auf dem Palladium abgeschieden ist. Zur Hydrodehalogenierung wird die die abzubauenden halogenierten Kohlenwasserstoffverbindungen enthaltende wäßrige Phase mit dem Katalysator in Kontakt gebracht. Gleichzeitig wird Wasserstoff entweder direkt oder durch eine als Wasserstoffquelle dienende Substanz zugesetzt. Dann erfolgt eine Hydrodehalogenierung bei Umgebungstemperaturen bis zu 50° C und Atmosphärendruck bis zu einem Überdruck von ca. 35 bar.

In der Praxis haben sich die in den US-Patenten 5 177 268 und 5 196 617 beschriebenen Verfahren zur Hydrodehalogenierung von halogenierten organischen Verbindungen in wäßriger Umgebung nicht bewährt, da zumindest im Rahmen von Bodenund Grundwassersanierungsmaßnahmen eine relativ schnelle Vergiftung" des hier verwendeten Katalysators zu beobachten ist. Es hat sich gezeigt, daß die "Vergiftung" bzw. Inaktivierung des Katalaysators auf die im Grundwasser immer vorhandenen ionischen Verbindungen zurückzuführen ist. Diese ionischen Verbindungen können durch Chemisorption irreversibel auf den metallisierten Oberflächen des Katalysators sorbiert werden, so daß das katalytisch wirkende Palladium nicht mehr für die Dehalogenierung zur Verfügung steht.

Ausgehend von diesem Stand der Technik liegt der Erfindung die Aufgabe zugrunde, einen Katalysator zur Dehalogenierung von halogenierten Kohlenwasserstoffverbindungen in einer wäßrigen Phase und unter Umgebungsbedingungen anzugeben, dessen katalytische Wirkung über eine längere Zeitdauer auch beim Vorliegen von ionischen Verbindungen in der wäßrigen Umgebung erhalten bleibt.

Die voranstehende Aufgabe wird durch den Gegenstand des Anspruchs 1 gelöst.

Erfindungsgemäß ist nämlich erkannt worden, daß sich die katalytisch aktive Substanz eines Trägerkatalysators durch eine stark hydrophobe Umgebung gegen eine Vergiftung", wie sie voranstehend beschrieben ist, schützen läßt.

Die Vergiftung des im Stand der Technik beschriebenen Katalysators ist im wesentlichen auf die Beschaffenheit und Eigenschaften des Trägermaterials zurückzuführen.

Bei Kohle, genauergesagt Aktivkohle, handelt es sich um ein mikro- bis mesoporöses Trägermaterial, d.h. um ein Trägermaterial mit einem Porendurchmesser der Größenordnung < 2 bis 50 nm. Aktivkohle stellt schon für sich, d.h. ohne eine darauf abgeschiedene katalytisch aktive Substanz, ein Adsorbens für unterschiedlichste Stoffe dar. So kann Aktivkohle bspw. zum Entfernen von Chlor und Ozon aus Wasser verwendet werden, genauso wie zum Adsorbieren von Benzindämpfen. Diese verschiedenen Anwendungsmöglichkeiten der Aktivkohle verdeutlichen, daß es sich hierbei zwar um ein hydrophobes aber nicht um ein stark hydrophobes Trägermaterial handelt, so daß in wäßriger Umgebung sowohl Waser als auch in diesem gelöste Ionen in die Poren der Aktivkohle eindringen können. Der allergrößte Teil der für die katalytisch aktive Substanz zur Verfügung stehenden Oberfläche des Trägermaterials, nämlich über 99%, wird durch die Porenoberfläche gebildet. Zwar läßt sich eine Deaktivierung des auf der äußeren Oberfläche des Trägermaterials abgeschiedenen katalytisch aktiven Metalls durch die in der wäßrigen Umgebung vorhandenen ionischen Verbindungen nicht ohne weiteres verhindern. Die katalytische Wirkung des Trägerkatalysators insgesamt wird aber nur minimal reduziert, wenn die katalytische Wirkung des in den Poren des Trägermaterials abgeschiedenen Metalls erhalten bleibt. Als besonders vorteilhaft wird deshalb die Verwendung eines mikroporösen, stark hydrophoben Trägermaterials vorgeschlagen.

Als mikroporös werden Trägermaterialien mit einem Porendurchmesser von weniger als 2 nm bezeichnet. Ein Trägermaterial gilt im Zusammenhang mit der vorliegenden Erfindung dann als stark hydrophob, wenn es nicht nur amphiphil, sondern tatsächlich so apolar ist, daß es wasser- und damit auch ionenabweisend wirkt.

Sowohl die geringe Porengröße des erfindungsgemäß vorgeschlagenen Trägermaterials als auch seine deutlich hydrophoben Eigenschaften verhindern weitestgehend ein Eindringen der in der wäßrigen Umgebung vorliegenden ionischen Verbindungen in die Poren des Trägermaterials, so daß die dort abgeschiedene katalytisch aktive Substanz durch die ionischen Verbindungen nicht inaktiviert werden kann. Die erfindungsgemäß vorgeschlagenen Trägerkatalysatoren zeigen daher auch über längere Zeiträume hinweg eine gute katalytische Wirkung, was ihre Verwendung insbesondere auch in Verbindung mit Boden- und Grundwassersanierungsmaßnahmen besonders attraktiv macht.

Grundsätzlich kann in Rahmen der Erfindung auch ein Trägerkatalysator verwendet werden, der nicht nur eine Dehalogenierung, sondern auch eine Hydrodehalogenierung von halogenierten Kohlenwasserstoffverbindungen begünstigt. Dazu könnte auf dem Trägermaterial eine hydrieraktive Substanz als katalytisch aktive Substanz abgeschieden sein. In diesem Falle muß dafür gesorgt werden, daß der die abzubauenden Verbindungen enthaltenden wäßrigen Phase auch Wasserstoff in hinreichenden Mengen zugesetzt wird, damit neben einer Dehalogenierung auch eine Hydrierung der Kohlenwasserstoffverbindungen stattfinden kann. In der Praxis haben sich als katalytisch aktive Substanzen die Metalle der Gruppe VIIIb, also Eisen (Fe), Cobalt (Co), Nickel (Ni), Ruthenium (Ru), Rhodium (Rh), Palladium (Pd), Osmium (Os), Iridium (Ir) und Platin (Pt), sowie die Metalle der Gruppe Ib, nämlich Kupfer (Cu), Silber (Ag) und Gold (Au), bewährt.

Besonders vorteilhaft ist es, wenn der mittlere Porendurchmesser des Trägermaterials mindestens so groß und vorzugsweise geringfügig größer ist als der Durchmesser der Moleküle der abzubauenden Kohlenwasserstoffverbindungen. Ist der Durchmesser der Poren des Trägermaterials kleiner als der Durchmesser der abzubauenden Moleküle, dann können diese Moleküle genausowenig wie die in der wäßrigen Umgebung gelösten ionischen Verbindungen bis zu der auf der Porenoberfläche abgeschiedenen katalytisch aktiven Substanz vordringen. Eine Dehalogenierung kann dann nur durch die auf der äußeren Trägeroberfläche abgeschiedene katalytisch aktive Substanz unterstützt werden, und zwar auch nur solange, bis diese durch die in der wäßrigen Phase vorhandenen inonischen Verbindungen deaktiviert ist. Das Trägermaterial für den erfindungsgemäß zu verwendenden Trägerkatalysator sollte also so ausgewählt werden, daß sein mittlerer Porendurchmesser auf den Moleküldurchmesser der abzubauenden Kohlenwasserstoffverbindungen abgestimmt ist.

In diesem Zusammenhang erweist sich die Verwendung von Zeolithen als Trägermaterial als besonders vorteilhaft. So lassen sich nämlich sowohl Zeolithe mit einem vorgegebenen Porendurchmesser einfach herstellen als auch Zeolithe mit unterschiedlich stark ausgeprägten hydrophoben Eigenschaften. Zeolithe vom Typ Y weisen einen mittleren Porendurchmesser von 0,74 nm auf und eignen sich daher besonders zum Abbau von 1,2-Dichlorbenzol, dessen Moleküldurchmesser etwa 0,6 nm beträgt. Die hydrophoben Eigenschaften eines Zeolithen werden durch das Verhältnis der Siliciumatome zu den Aluminiumatomen in der den Zeolithen bildenden kristallinen Aluminiumsilikatstruktur bestimmt. Ist das Verhältnis der Siliciumatome zu den Aluminiumatomen kleiner als 7, so zeigt der Zeolith hydrophile Eigenschaften. Der Übergang von hydrophilen zu hydrophoben Eigenschaften tritt bei einem Verhältnis von ca. 7 bis 10 auf. In einer vorteilhaften Ausgestaltung der Erfindung sollte das Verhältnis der Siliciumatome zu den Aluminiumatomen des als Trägermaterial verwendeten Zeolithen daher deutlich größer als 10 sein. Besonders vorteilhaft ist es, wenn das Verhältnis der Silicium-atome zu den Aluminiumatomen sogar deutlich größer als 100 ist.

Eine Inaktivierung der katalytisch aktven Substanz eines Trägerkatalysators in einem wäßrigen Medium kann auch durch anaerobe biologische Prozesse an der Trägeroberfläche und Abscheidung von oberflächenaktiven Substanzen oder Huminstoffen eintreten. Einer derartigen Inaktivierung kann durch eine periodische oxidative Behandlung des Trägerkatalysators wirkungsvoll entgegengetreten werden. Dazu könnte der Trägerkatalysator beispielsweise periodisch mit einer Wasserstoffperoxidlösung gespült werden. Desweiteren ist in der Praxis auch die Inaktivierung von Katalysatoren in einer wäßrigen Phase durch Karbonatfällungen zu beobachten. Diese können einfach durch Spülungen mit einer schwachen Säure beseitigt werden.

Schließlich sei noch darauf hingewiesen, daß sich Trägerkatalysatoren, wie sie voranstehend beschrieben sind, gut als reaktives Material in sogenannten reaktiven Wänden und auch als in-situ Reaktor in Brunnen mit freier oder erzwungener Durchströmung eignen.

Es gibt nun verschiedene Möglichkeiten, die Lehre der vorliegenden Erfindung in der Praxis umzusetzen. Dazu ist einerseits auf die dem Patentanspruch 1 nachgeordneten Ansprüche, andererseits auf die nachfolgende Erläuterung der Figuren zu verweisen.
Fig. 1 zeigt den Prozeß des schrittweisen Abbaus von 1,2-Dichlorbenzol zu Benzol in Strukturformeln.
Fig. 2 zeigt den zeitlichen Verlauf des Abbaus von 1,2-Dichlorbenzol zum einen in entionisiertem Wasser und zum anderen in entionisiertem Wasser, dem 30 mg/l Sulfit zugesetzt worden ist. Der Abbau des 1,2-Dichlorbenzols wird hier in beiden Fällen durch einen Trägerkatalysator mit Palladium als katalytisch aktiver Substanz auf einem Aluminiumträger (0,5 g/l) unterstützt. Das Wasser ist wasserstoffgesättigt.
Fig. 3 zeigt die Gitterstruktur eines Y-Zeolithen.
Fig. 4 zeigt den zeitlichen Verlauf des Abbaus von 1,2-Dichlorbenzol in entionisiertem Wasser, wobei hier verschiedene Trägerkatalysatoren (0,5g/l) verwendet wurden. Bei allen Trägerkatalysatoren dient Palladium als katalytisch aktive Substanz und ein Zeolith als Trägermaterial. Unterschiede bestehen lediglich hinsichtlich der Porengröße und dem Verhältnis der Siliciumatome zu den Aluminiumatomen, d.h. hinsichtlich der Ausprägung der hydrophoben Eigenschaften. Das Wasser ist wasserstoffgesättigt.
Fig. 5 zeigt ebenfalls den zeitlichen Verlauf des Abbaus von 1,2-Dichlorbenzol entsprechend Fig. 4, nur daß das 1,2-Dichlorbenzol hier in entionisiertem Wasser vorliegt, welchem 30 mg/l Sulfit zugesetzt worden ist. Das Wasser ist wasserstoffgesättigt.

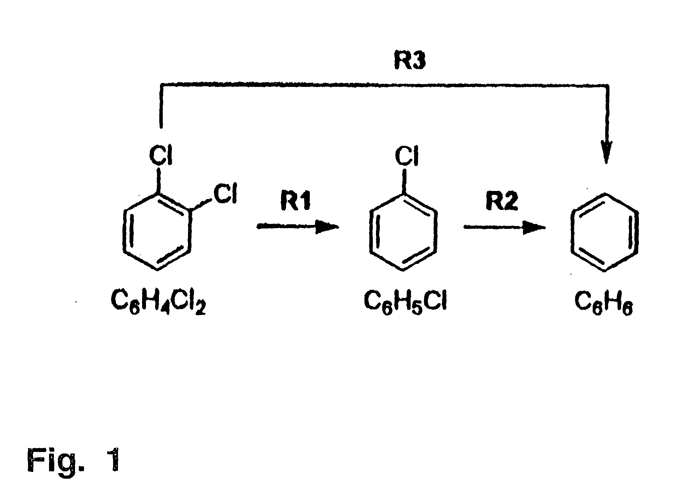

Die Erfindung wird anhand der katalytisch unterstützten Hydrodehalogenierung von 1,2-Dichlorbenzol erläutert. Fig. 1 gibt den Abbau von 1,2-Dichlorbenzol zu Benzol auf zwei verschiedenen Reaktionswegen wieder. Das 1,2-Dichlorbenzol kann entweder in einem ersten Reaktionsschritt (R1) zu Chlorbenzol abgebaut werden, das wiederum in einem zweiten Reaktionsschritt (R2) zu Benzol abgebaut wird, oder auch direkt (Reaktionsschritt R3) zu Benzol abgebaut werden.

Der Moleküldurchmesser von Benzol beträgt ungefähr 0,52 nm. Der Moleküldurchmesser von 1,2-Dichlorbenzol beträgt ungefähr 0,6nm.

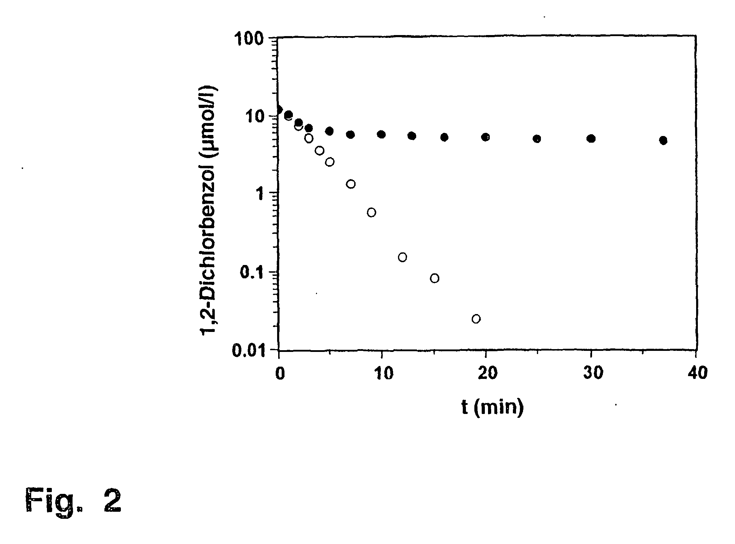

Fig. 2 veranschauchlicht das aus der Praxis bekannte Phänomen der Vergiftung eines in einer wäßrigen Phase eingesetzten Katalysators beim Vorliegen von ionischen Verbindungen. Zur Hydrodehalogenierung des 1,2-Dichlorbenzols wurde hier ein Trägerkatalysator verwendet, bei dem Palladium als katalytisch aktive Substanz auf einem Aluminiumträger abgeschieden ist. Wird dieser Katalysator in entionisiertem Wasser eingesetzt, so erfolgt ein kontinuierlicher, relativ rascher und vollständiger Abbau des 1,2-Dichlorbenzols. Der zeitliche Verlauf des Abbaus wird hier durch die nicht ausgefüllten Kreise wiedergegeben. Im Gegensatz dazu kommt der Dehalogenierungsprozeß in einer wäßrigen Phase, in der ionisierte Verbindungen vorliegen, sehr schnell zum Stillstand, obwohl die Konzentration des 1,2-Dichlorbenzols noch fast der Ausgangskonzentration entspricht. Dieser Reaktionsverlauf wird durch die ausgefüllten Kreise wiedergegeben. Fig. 1 veranschaulicht, daß der hier verwendete Katalysator sehr rasch durch die in der wäßrigen Phase vorliegenden ionischen Verbindungen deaktiviert wird.

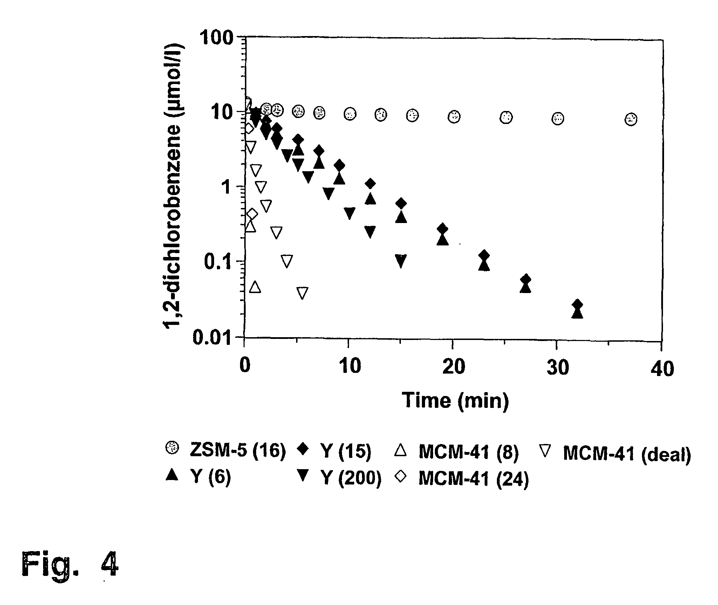

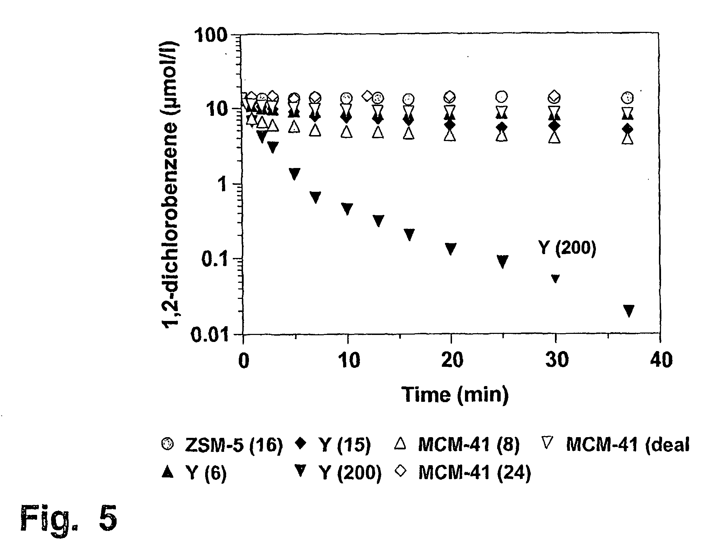

Die Fig. 4 und 5 bestätigen die in Fig. 2 wiedergegebenen Versuchsergebnisse, wobei hier allerdings andere Trägerkatalysatoren verwendet wurden. Als katalytisch aktive Substanz wurde auch in diesen Fällen immer Palladium verwendet. Die Trägerkatalysatoren unterscheiden sich lediglich im Trägermaterial, wobei es sich in den Fällen der Fig. 4 und 5 immer um Zeolithträger oder zeolithähnliche Träger handelt.

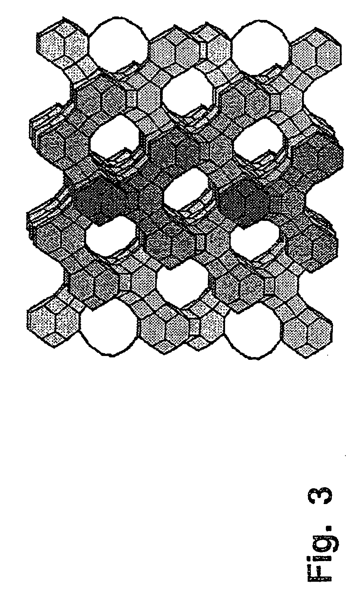

Lediglich als Beispiel ist in der Fig. 3 die kristalline Struktur eines Zeoliths vom Typ Y wiedergegeben. Dieser Zeolith weist eine Porengröße von ungefähr 0,74 nm auf. Seine hydrophoben Eigenschaften werden durch das Verhältnis der in der Aluminiumsilikatstruktur vorhandenen Siliciumatome zu den Aluminiumatomen bestimmt. Je höher das Verhältnis, d.h. je größer der Siliciumanteil ist, um so stärker sind die hydrophoben Eigenschaften des Zeolithen ausgeprägt.

Fig. 4 gibt den zeitlichen Verlauf des Abbaus von 1,2-Dichlorbenzol in entionisiertem Wasser wieder. Bei Verwendung eines Zeolithen vom Typ ZSM-5 als Trägermaterial des Palladiumkatalysators tritt kein nennenswerter Abbau des 1,2-Dichlorbenzols auf. Dies ist auf die Porengröße dieses Zeolithen zurückzuführen, die lediglich ungefähr 0,54 nm beträgt, also kleiner ist als der Durchmesser des 1,2-Dichlorbenzolmoleküls.

Außerdem wurden noch zeolithähnliche Materialien vom Typ MCM-41 mit unterschiedlichen hydrophoben Eigenschaften ausgetestet. Die Zahlenangabe nach der Typangabe MCM-41 gibt jeweils das Verhältnis der Siliciumatome zu den Aluminiumatomen des Materials wieder. Bei Verwendung eines Palladiumkatalysators mit einem MCM-41 als Trägermaterial ist ein kontinuierlicher, sehr rascher und vollständiger Abbau des 1,2-Dichlorbenzols zu beobachten. Dies ist auf den sehr großen Porendurchmesser dieses mesoporösen Trägermaterials von ca. 2,7 nm zurückzuführen. Die 1,2-Dichlorbenzolmoleküle können hier ungehindert in die Poren des Katalysatormaterials eindringen, so daß auch das in den Poren abgeschiedene Palladium katalytisch wirken kann.

Schließlich wurden noch drei Palladiumkatalysatoren getestet, deren Trägermaterial durch Zeolithen vom Y-Typ mit Silicium zu Aluminium-Verhältnissen von 6,15 und 200 gebildet wurde. Bei Verwendung dieser Katalysatoren war ein kontinuierlicher gegenüber den Versuchen mit MCM-41 langsamerer aber auch vollständiger Abbau des 1,2-Dichlorbenzols zu beobachten. Aufgrund der wesentlich kleineren Porengröße von ungefähr 0,74 nm der Y-Zeolithen im Vergleich zu der Porengröße der MCM-41 lief der Dehalogenierungsprozeß hier langsamer ab, die Porengröße von 0,74 nm ist aber offensichtlich immer noch größer als der Durchmesser des 1,2-Dichlorbenzolmoleküls.

Die im Zusammenhang mit der Fig. 4 beschriebenen Versuche wurden nun für 1,2-Dichlorbenzol in entionisiertem Wasser wiederholt, dem 30 mg/l Sulfit zugesetzt worden ist. Das 1,2-Dichlorbenzol lag jetzt also in einer wäßrigen Phase vor, die auch ionische Verbindungen enthielt. Bei diesen Versuchsbedingungen zeigte nur noch ein Palladiumkatalysator befriedigende Ergebnisse in Form eines kontinuierlichen im wesentlichen vollständigen Abbaus, nämlich der Palladiumkatalysator, bei dem als Trägermaterial ein stark hydrophober Zeolith vom Typ Y verwendet wurde. Dieser Zeolith weist ein Silicium/Aluminiumverhältnis von 200 auf und eine mittlere Porengröße von 0,74 nm.

Bei allen übrigen Versuchen wurde kein nennenswerter Abbau des 1,2-Dichlorbenzols festgestellt. Im Falle des als Trägermaterial verwendeten ZSM-5-Zeolithen ist dies auf die zu kleine mittlere Porengröße von 0,54 nm zurückzuführen. Im Falle der MCM-41 ist dies auf die sehr große Porengröße zurückzuführen, die es nämlich nicht nur den 1,2-Dichlorbenzolmolekülen ermöglicht, ins Poreninnere einzudringen, sondern auch den in der wäßrigen Phase gelösten ionischen Verbindungen. Diese bewirken dann sehr schnell eine Deaktivierung des gesamten auf dem Trägermaterial abgeschiedenen Palladiums. Fig. 5 veranschaulicht schließlich noch, daß eine Deaktivierung des auf der Porenoberfläche des Trägermaterials abgeschiedenen Palladiums nicht allein durch einen möglichst klein gewählten Porendurchmesser verhindert werden kann. Ein nennenswerter Abbau des 1,2-Dichlorbenzols ist nämlich bspw. auch nicht bei Zeolithen vom Y-Typ zu beobachten, die leicht hydrophil oder nur gering hydrophob sind. Die in der wäßrigen Phase vorhandenen ionischen Verbindungen sind offensichtlich auch in der Lage, in Poren mit einem mittleren Durchmesser von 0,74 nm einzudringen, wenn das Trägermaterial nur schwach hydrophob ist.

## Patentansprüche

1. Anwendung eines Trägerkatalysators mit mindestens einer auf einem Trägermaterial abgeschiedenen, katalytisch aktiven Substanz zur Dehalogenierung von halogenierten Kohlenwasserstoffverbindungen in einer wäßrigen Phase unter Bedingungen bei denen Wasser als fluide Phase vorliegt, wobei die katalytisch aktive Substanz dadurch geschützt wird, dass als Träger ein mikroporöser und hydrophober Zeolith Y verwendet wird, dessen Porengröße und Hydrophobizität auf die Größe der Schadstoffmoleküle insofern angepaßt ist, dass die Moleküle der halogenierten Kohlenwasserstoffverbindungen den im wesentlichen im Mikroporenraum des Trägers abgeschiedenen Katalysator erreichen können, die in der wäßrigen Phase vorhandenen ionischen Verbindungen jedoch aufgrund ihrer Größe oder ihrer Polarität nicht bis zu dem im Mikroporenraum vorhandenen Katalysator gelangen können.

2. Anwendung eines Trägerkatalysators nach Anspruch 1, wobei die Dehalogenierung in einem Temperaturbereich von 0°C bis +70°C, und unter normalen Druckverhältnissen, d.h. Atmosphärendruck bis ca. 35 bar erfolgt.

3. Anwendung nach Anspruch 1, wobei eine hydrieraktive Substanz als katalytisch aktive Substanz verwendet wird.

4. Anwendung nach Anspruch 1, wobei ein Metall aus der Gruppe VIIIb oder Ib als katalytisch aktive Substanz verwendet wird.

5. Anwendung nach Anspruch 1, wobei das Verhältnis der Si-Atome zu den Al-Atomen im Zeolithkristallgitter größer als 10 ist.

6. Anwendung nach Anspruch 1, wobei das Verhältnis der Si-Atome zu den Al-Atomen im Zeolithkristallgitter größer als 100 ist.

7. Anwendung eines Trägerkatalysators nach einem der Ansprüche 1 bis 6, wobei der Trägerkatalysator periodisch oxidativ behandelt wird.

8. Anwendung eines Trägerkatalysators nach Anspruch 7, wobei der Trägerkatalysator periodisch mit Wasserstoffperoxidlösung gespült wird.

9. Anwendung eines Trägerkatalysators nach einem der Ansprüche 1 bis 8, wobei der Trägerkatalysator periodisch mit einer schwachen Säure gespült wird.

10. Anwendung eines Trägerkatalysators nach einem der Ansprüche 1 bis 9 als reaktives Material in reaktiven Wänden oder als in-situ Reaktor in Brunnen mit freier oder erzwungener Durchströmung.

## Claims

1. Usage of a supported catalyst with at least one catalyticly active substance precipitated on the carrier material for the dehalogenation of halogenated hydrocarbons in aqueous phase at conditions where water is present as a fluid phase, whereby the catalyticly active substance is protected by a strongly hydrophobic and microporous carrier, a zeolite type Y, with a pore size and hydrophobicity enabling the halogenated hydrocarbon molecules to reach the catalyst, which is precipitated mainly in the micropores of the carrier, whereas dissolved inorganic ions due to their size and polarity are not able to reach the catalyst precipitated within the micropores.

2. Usage of a supported catalyst as described in claim 1, whereby the dehalogenation occurs in a temperature range between 0°C and 70°C, and at normal pressure conditions, from atmospheric pressure up to 35 bar.

3. Usage as described in claim 1, whereby a substance with hydrogenation activity is used as the catalyticly active substance.

4. Usage as described in claim 1, whereby a metal out of the groups VIIIb or Ib is used as the catalyticly active substance.

5. Usage as described in claim 1, whereby the ratio between silicon and aluminum of the zeolite is greater than 10.

6. Usage as described in claim 1, whereby the ratio between silicon and aluminum of the zeolite is greater than 100.

7. Usage of a supported catalyst as described in claims 1 to 6, whereby the supported catalyst is treated periodically with an oxidizing agent.

8. Usage of a supported catalyst as described in claim 7, whereby the supported catalyst is treated periodically with diluted hydrogen peroxide.

9. Usage of a supported catalyst as described in claims 1 to 8, whereby the supported catalyst is treated periodically with a weak acid.

10. Usage of a supported catalyst as described in claims 1 to 9 as a reactive material in so called "reactive walls" or in "in-situ" reactors in wells with flow driven by natural gradients or forced flow.

## Revendications

1. Application d'un catalyseur portant au moins une matière isolée et catalytiquement active qui a pour but la déshalogénation des combinaisons hydrocarbures dans une phase aqueuse à condition que l'eau soit une phase fluide et que la matière catalytiquement active soit protégée par l'application d'un porteur microporeux et hydrophobe, le zéolite Y; étant donné que la taille de ses pores ainsi que son hydrophobilité s'adaptent à la taille des molécules polluantes de manière à ce que les molécules des combinaisons halogénées de l'hydrocarbure puissent atteindre le catalyseur isolé au corps des micropores du porteur, et que par contre, dû à leur taille ou leur polarité, les combinaisons ioniques de la phase aqueuse ne puissent pas atteindre le corps des micropores du catalyseur.

2. Application d'un catalyseur porteur selon exigence 1, tandis que la déshalogénation a lieu dans une température de 0°C à +70°C, et sous des conditions de pression normales, ce que signifie que la pression atmosphérique est d'environ 35 bar.

3. Application selon exigence 1, tandis qu'une matière hydro traitante est utilisée comme matière active.

4. Application selon exigence 1, tandis qu'un métal du groupe VIIIb ou Ib est utilisé comme matière active.

5. Application selon exigence 1, tandis que la proportion entre les Si atomes et les Al atomes dans le réseau cristallin de la zéolite est supérieur à 10.

6. Application selon exigence 1, tandis que la proportion entre les Si atomes et les Al atomes dans le réseau cristallin de la zéolite est supérieur à 100.

7. Application d'un catalyseur porteur selon une des exigences entre 1 et 6, tandis qu'ici le catalyseur porteur est traité périodiquement de manière oxydative.

8. Application d'un catalyseur porteur selon exigence 7, tandis que le catalyseur est périodiquement rincé avec une solution de peroxyde d'hydrogène.

9. Application d'un catalyseur porteur selon une des exigences entre 1 et 8, tandis que le catalyseur porteur est rincé périodiquement avec un acide faible.

10. Application d'un catalyseur porteur selon une des exigences entre 1 et 9 comme matériel réactivé dans des parois réactivés ou comme in situ réacteur dans des fontaines de libre écoulement ou d'écoulement forcé.
